# EUROPEAN PATENT APPLICATION

(11) **EP 4 790 930 A1**
(43) Date of publication of application: **12.08.2026**
(21) Application number: 24890222.3
(22) Date of filing: 13.08.2024
(51) Int. Cl.: H04L 1/06

(54) **INFORMATION FEEDBACK METHOD, INFORMATION RECEIVING METHOD, APPARATUS, AND STORAGE MEDIUM**

(30) Priority: 17.11.2023 CN 202311545010
(71) Applicant: ZTE CORPORATION, Shenzhen, Guangdong 518057 (CN)
(72) Inventor: SUN, Yunqi, Shenzhen, Guangdong 518057 (CN); CHEN, Yijian, Shenzhen, Guangdong 518057 (CN); ZHANG, Shujuan, Shenzhen, Guangdong 518057 (CN); YANG, Jun, Shenzhen, Guangdong 518057 (CN); YU, Hongkang, Shenzhen, Guangdong 518057 (CN); JIAN, Mengnan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/111623
(87) International publication number: WO 2025/102859

(57) **Abstract**

The present disclosure relates to the technical field of communications. Provided in the embodiments of the present disclosure are an information feedback method, an information receiving method, an apparatus, and a storage medium. The information feedback method comprises: determining a codebook for channel information feedback, the codebook comprising a plurality of codewords constructed by basic vectors, each basic vector separately corresponding to one first vector and one second vector, the first vector corresponding to a first parameter l, all elements of the first vector being determined according to the first parameter 1, the second vector corresponding to a second parameter m, all elements of the second vector being determined according to the second parameter m, the sum of a third parameter A determined by the first parameter l and a fourth parameter B determined by the second parameter m being not greater than a fifth parameter C, and the fifth parameter C being a real number; determining a target codeword from the codebook; and feeding back information of the target codeword.

## Description

### CROSS REFERENCE TO RELATED APPLICATIONS

This application claims priority to Chinese Patent Application No. 202311545010.9 filed on November 17, 2023, entitled "Information feedback method, information receiving method, apparatus, and storage medium", the entirety of which is incorporated herein by reference.

### TECHNICAL FIELD

The present disclosure relates to the technical field of communications, and in particular to an information feedback method, an information receiving method, an apparatus, and a storage medium.

### BACKGROUD

In related wireless communication systems, MIMO (multiple input multiple output) technology is widely used. In MIMO technology, precoding is an important step, in which a base station may select an optimal codeword from a precoding codebook according to indication information fed back by a terminal, thereby enabling the terminal to achieve higher transmission performance.

In related MIMO technology, not all codewords in a precoding codebook can be utilized, leading to uncertainty of codewords in the codebook, and occupying extra communication resources during transmission of precoding indication corresponding to the codewords. Therefore, how to reduce the communication resources occupied by feeding back precoding indication corresponding to codewords is an urgent problem to be solved.

### SUMMARY

Provided in the embodiments of the present disclosure are an information feedback method, an information receiving method, an apparatus, and a storage medium, for reducing communication resources occupied by feeding back information of codewords.

In a first aspect, there is provided an information feedback method, including: determining a codebook for channel information feedback, wherein the codebook includes a plurality of codewords constructed by basic vectors, each basic vector corresponds to one first vector and one second vector, the first vector corresponding to a first parameter 1, all elements of the first vector are determined according to the first parameter 1, the second vector corresponds to a second parameter m, all elements of the second vector are determined according to the second parameter m, the sum of a third parameter A determined by the first parameter l and a fourth parameter B determined by the second parameter m is not greater than a fifth parameter C, and the fifth parameter C is a real number; determining a target codeword from the codebook; and feeding back information of the target codeword.

In a second aspect, there is provided an information receiving method, including: receiving information of a target codeword; wherein the target codeword is a codeword determined from a codebook; the codebook includes a plurality of codewords constructed by basic vectors, each basic vector corresponds to one first vector and one second vector, the first vector corresponds to a first parameter l, all elements of the first vector are determined according to the first parameter l, the second vector corresponds to a second parameter m, all elements of the second vector are determined according to the second parameter m, the sum of a third parameter A determined by the first parameter l and a fourth parameter B determined by the second parameter m is not greater than a fifth parameter C, and the fifth parameter C is a real number; and determining the target codeword based on the information of the target codeword.

In a third aspect, there is provided a communication apparatus, including: a determining module configured to determine a codebook for channel information feedback, wherein each basic vector corresponds to a first vector and a second vector, the first vector corresponds to a first parameter l, all elements of the first vector are determined according to the first parameter 1, the second vector corresponds to a second parameter m, all elements of the second vector are determined according to the second parameter m, the sum of a third parameter A determined by the first parameter l and a fourth parameter B determined by the second parameter m is not greater than a fifth parameter C, and the fifth parameter C is a real number; the determining module is further configured to determine a target codeword from the codebook, wherein a basic vector of the target codeword satisfies a constraint; and a communication module configured to feed back information of the target codeword.

In a fourth aspect, there is provided another communication apparatus, including: a communication module configured to receive information of a target codeword; wherein the target codeword is a codeword determined from a codebook; the codebook includes a plurality of codewords constructed by basic vectors, each basic vector corresponds to one first vector and one second vector, the first vector corresponds to a first parameter l, all elements of the first vector are determined according to the first parameter 1, the second vector corresponds to a second parameter m, all elements of the second vector are determined according to the second parameter m, the sum of a third parameter A determined by the first parameter l and a fourth parameter B determined by the second parameter m is not greater than a fifth parameter C, and the fifth parameter C is a real number; and a determining module configured to determine the target codeword based on the information of the target codeword.

In a fifth aspect, there is provided a communication apparatus, including a processor, wherein the processor, when executing a computer program, implements the information feedback method of the first aspect described above, or implements the information receiving method of the second aspect described above.

In a sixth aspect, there is provided a computer-readable storage medium, the computer-readable storage medium includes computer instructions, wherein the computer instructions, when executed, implement the information feedback method of the first aspect described above, or implement the information receiving method of the second aspect described above.

In the embodiments of the present disclosure, codewords in a codebook are constructed by basic vectors, each basic vector corresponds to a first vector and a second vector. Among others, the first parameter corresponding to the first vector and the second parameter corresponding to the second vector have a constraint, so as to limit the codewords constructed by basic vectors, thereby enabling all codewords in the codebook to be utilized. In this way, when feeding back information of codewords, the uncertainty and redundancy of codewords are reduced, thereby reducing the communication resources occupied when feeding back information of codewords.

### BRIEF DESCRIPTION OF THE DRAWINGS

In order to more clearly illustrate the technical solutions in the embodiments of the present disclosure, the drawings required for use in the embodiments of the present disclosure will be briefly introduced below, obviously, the drawings described below are merely drawings of some embodiments of the present disclosure, and other drawings can be obtained by those skilled in the art based on these drawings.
FIG. 1 is a schematic diagram of a spatial position relationship between a UPA and a terminal according to embodiments of the present disclosure.
FIG. 2 is a schematic diagram of an architecture of a communication system according to embodiments of the present disclosure.
FIG. 3 is a schematic flowchart of an information feedback method according to embodiments of the present disclosure.
FIG. 4 is a schematic structural diagram of a codebook according to embodiments of the present disclosure.
FIG. 5 is a schematic structural diagram of a codebook according to embodiments of the present disclosure.
FIG. 6 is a schematic structural diagram of a codebook according to embodiments of the present disclosure.
FIG. 7 is a schematic structural diagram of a codebook according to embodiments of the present disclosure.
FIG. 8 is a schematic flowchart of an information receiving method according to embodiments of the present disclosure.
FIG. 9 is a schematic structural diagram of a communication apparatus according to embodiments of the present disclosure.
FIG. 10 is a schematic structural diagram of another communication apparatus according to embodiments of the present disclosure.
FIG. 11 is a schematic structural diagram of another communication apparatus according to embodiments of the present disclosure.

### DETAILED DESCRIPTION

Technical solutions in embodiments of the disclosure will be described clearly and thoroughly below with reference to the accompanying drawings in embodiments of the disclosure. Obviously, the embodiments described are merely part of the embodiments of the disclosure rather than all of the embodiments. All other embodiments obtained by those skilled in the art without creative work based on embodiments in the present disclosure fall within the scope of protection of the present disclosure.

In the description of the present disclosure, unless otherwise specified, "/" means "or", for example, A/B may mean A or B. As used herein, the term "and/or" is merely an association relationship describing associated objects, indicating that there may be three relationships, for example, A and/or B may include the following three situations: A alone, A and B together, B alone. In addition, the term "at least one" means one or more, and the term "a plurality of" means two or more than two. Terms such as "first" and "second" do not limit the quantity and execution order, and terms such as "first" and "second" do not necessarily imply a difference.

It should be noted that, in the present disclosure, words such as "exemplarily" or "for example" are used to represent examples, illustrations, or explanations. Any embodiment or design scheme described as "exemplarily" or "for example" in the present disclosure should not be construed as being more preferred or advantageous than other embodiments or design schemes. Rather, the use of words such as "exemplarily" or "for example" is intended to present related concepts in a concrete manner.

In some cases, codewords are designed in a codebook according to discrete Fourier transform (DFT) in a precoding scheme, which has the advantages of high orthogonality between different codewords, low computational complexity, and low bit overhead, and is thus widely adopted by uniform linear arrays (ULA) and uniform planar arrays (UPA).

The steps of the precoding scheme are as follows: taking the channel capacity as B bps/Hz as an example, the number of codewords is G = 2B, and both the first communication node and the second communication node need to store a codebook, which is *C =* {***c***₁,***c***₂,...,***c**_{G}*}. The first communication node obtains channel information by measuring a pilot signal, selects the codeword that matches the channel information most according to a preset rule, and sends the codeword number corresponding to the codeword to the second communication node in the form of a precoding indication, such that the second communication node looks up the codeword according to the precoding indication to obtain the channel information.

In the 3GPP 38.241 protocol, for scenarios of 4, 8, 12, 16, 24, 32 antenna ports using the DFT scheme, the codewords include the following codeword blocks: ${u}_{m} = \left\{\begin{matrix}\left[1,{e}^{j \frac{2 πm}{{O}_{2} {N}_{2}}},…,{e}^{j \frac{2 πm \left({N}_{2}-1\right)}{{O}_{2} {N}_{2}}}\right] , {N}_{2} > 1 \\ 1 , {N}_{2} = 1 ,\end{matrix}\right.$ ${v}_{l , m} = {\left[{u}_{m},{e}^{j \frac{2 πl}{{O}_{1} {N}_{1}}}{u}_{m},…,{e}^{j \frac{2 πl \left({N}_{1}-1\right)}{{O}_{1} {N}_{1}}}{u}_{m}\right]}^{T}$
wherein l is a first parameter of the codeword, m is a second parameter of the codeword, N_1 is a number of antennas in the vertical direction of the antenna array, N_2 is a number of antennas in the horizontal direction of the antenna array, O_1 is an oversampling factor in the vertical direction, O_2 is an oversampling factor in the horizontal direction, and the phases of each element of u_m and v_(l,m) are linear forms of their respective indices. v_(l,m) constitutes final feedback information, which may be simplified to the following relationship: ${v}_{l , m} = {\left({{u}^{˜}}_{l}⊗{u}_{m}\right)}^{T}$ ${{u}^{˜}}_{l} = \left[1,{e}^{j \frac{2 πl}{{O}_{1} {N}_{1}}},…,{e}^{j \frac{2 πl \left({N}_{1}-1\right)}{{O}_{1} {N}_{1}}}\right]$
wherein ⊗ is the Kronecker product. In some cases, the first communication node only needs to send l,m to the second communication node, and the second communication node may determine codewords in a codebook.

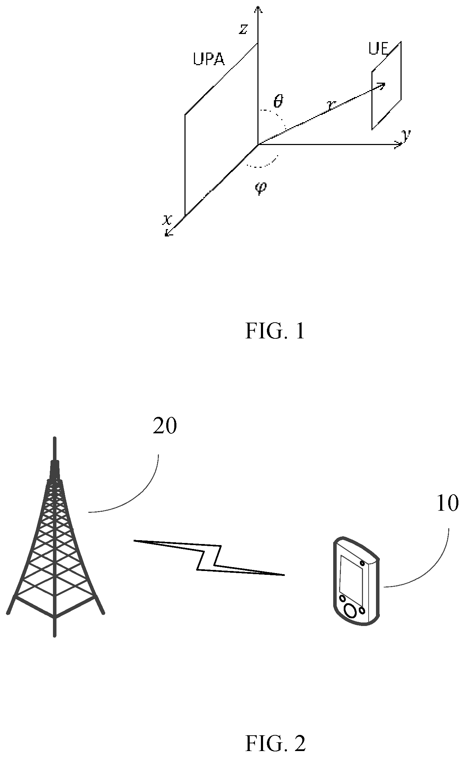

Exemplarily, taking the schematic diagram of the spatial position relationship between a UPA and a terminal shown in FIG. 1 as an example, and based on the above correspondence of codewords, the shortcomings of the codebook designed by the DFT scheme in the related art are described below. As shown in FIG. 1, the antenna element spacing is $d = \frac{λ}{2}$, when the direction of arrival is (*θ,φ*), response of the antenna element at the u-th row and v-th column has the following relationship: ${a}_{u , v} \left(θ, φ\right) = exp \left(j2π\frac{d}{λ}\left(u cos φ sin θ\right)+v cos θ\right)$

According to the correspondence between the DFT codebook and the array response: a_{u,v} (θ,φ) = [v_{l,m}]_{u,v}, it can be determined that the codewords in the DFT codebook satisfy the following relationship: $cos φ sin θ = \frac{2 l}{{O}_{1} {N}_{1}} , cos θ = \frac{2 m}{{O}_{2} {N}_{2}} ,$

Therefore, $cos φ = \frac{2 l}{{O}_{1} {N}_{1} sin θ}$.

It should be noted that the phase of the DFT codebook has cyclic symmetry, the value sets of the first parameter 1 and the second parameter m of the codeword are respectively the set $L = \left\{-\left⌊\frac{{O}_{1} {N}_{1}}{2}\right⌋,…,\left⌊\frac{{O}_{1} {N}_{1}}{2}\right⌋\right\}$ and the set $M = \left\{-\left⌊\frac{{O}_{2} {N}_{2}}{2}\right⌋,…,\left⌊\frac{{O}_{2} {N}_{2}}{2}\right⌋\right\}$, respectively. In the aforementioned sets, there are specific values of l, m such that the absolute value of $\frac{2 l}{{O}_{1} {N}_{1} sin θ}$ is greater than 1, while the value range of cos *φ* in the above precoding relationship is between [-1, 1], there is a contradiction between the value ranges of the two, as a result, the values of the first parameter and the second parameter of the above codeword cannot traverse the set *L* × *M*, that is a part of codewords cannot be realized in the angular space. This part of codewords are redundant codewords in the codebook, and their corresponding directions of arrival do not physically exist. Due to the existence of redundant codewords, the uncertainty of codewords is increased, the communication resources required for feeding back precoding indication corresponding to the codewords are increased, and the feedback efficiency is reduced. Therefore, how to reduce the communication resources occupied by feeding back precoding indication corresponding to the codeword is an urgent problem to be solved.

Based on this, the present disclosure provides information feedback and receiving methods. In the process of feeding back information corresponding to codewords, the codewords in a codebook used are constructed by basic vectors, each basic vector corresponds to a first vector and a second vector, wherein a first parameter corresponding to the first vector and a second parameter corresponding to the second vector have a constraint, so as to limit the codewords constructed by basic vectors, thereby enabling all codewords in the codebook to be utilized. In this way, when feeding back information of codewords, the uncertainty and redundancy of codewords are reduced, and further the communication resources occupied when feeding back information of codewords are reduced.

The information feedback and receiving methods provided by the present disclosure may be applied to a communication system as shown in FIG. 2. FIG. 2 shows a schematic diagram of an architecture of a communication system according to embodiments of the present disclosure. As shown in FIG. 2, the communication system includes a first communication node 10 and a second communication node 20.

In a wireless communication scenario, the first communication node 10 and the second communication node 20 communicate via a wireless channel. For example, the first communication node 10 is a terminal, the second communication node 20 is a base station, and the base station and the terminal communicate via a wireless channel. For another example, the first communication node 10 is a terminal, the second communication node 20 is a wireless router, and the wireless router and the terminal communicate via a wireless channel. For another example, the first communication node 10 is a first base station, the second communication node 20 is a second base station, and the first base station and the second base station communicate via a wireless channel. For another example, the first communication node 10 is a first terminal, the second communication node 20 is a second terminal, and the first terminal and the second terminal communicate via a wireless channel. For another example, the first communication node 10 is a relay, the second communication node 20 is a base station, and the base station and the relay communicate via a wireless channel. For another example, the first communication node 10 is a terminal, the second communication node 20 is a relay, and the relay and the terminal communicate via a wireless channel. For another example, the first communication node 10 is a first relay, the second communication node 20 is a second relay, and the first relay and the second relay communicate via a wireless channel. For another example, the first communication node 10 is a base station, the second communication node 20 is a satellite, and the satellite and the base station communicate via a wireless channel. For another example, the first communication node 10 is a satellite, the second communication node 20 is a base station, and the base station and the satellite communicate via a wireless channel. For another example, the first communication node 10 is a terminal, the second communication node 20 is a satellite, and the satellite and the terminal communicate via a wireless channel. For another example, the first communication node 10 is a satellite, the second communication node 20 is a terminal, and the terminal and the satellite communicate via a wireless channel. For another example, the first communication node 10 is a ground device, the second communication node 20 is an aircraft, and the aircraft and the ground device communicate via a wireless channel. For another example, the first communication node 10 is a first aircraft, the second communication node 20 is a second aircraft, and the first aircraft and the second aircraft communicate via a wireless channel.

In the embodiments of the present disclosure, description is mainly made by taking the first communication node 10 being a terminal and the second communication node 20 being a base station as an example.

In some embodiments, the second communication node 20 is configured to provide wireless access services for a plurality of terminals. A base station provides a service coverage area (also referred to as a cell). A terminal entering this area may communicate with the base station via wireless signals, thereby accepting the wireless access service provided by the base station.

In some embodiments, the second communication node 20 may be a base station or an evolutional node B (eNB or eNodeB) in Long Term Evolution (LTE), Long Term Evolution Advanced (LTEA), a base station device in a 5G network, or a base station in a future communication system, etc., the base station may include various macro base stations, micro base stations, home base stations, remote radio units, reconfigurable intelligent surfaces (RIS), routers, wireless fidelity (WIFI) devices, and other network-side devices.

In some embodiments, the first communication node 10 may be a device with wireless transceiver functions, which may be deployed on land, including indoors or outdoors, handheld, wearable, or vehicle-mounted; it may also be deployed on the water surface (such as ships, etc.); it may also be deployed in the air (such as airplanes, balloons, and satellites, etc.). The terminal may be a mobile phone, a Pad, a computer with wireless transceiver functions, a virtual reality (VR) device, an augmented reality (AR) device, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. A terminal may also sometimes be referred to as a user, a User Equipment (UE), an access terminal, a UE unit, a UE station, a mobile station, a mobile terminal, a remote station, a remote terminal, a mobile device, a UE terminal, a wireless communication device, a UE agent, or a UE apparatus, etc., which is not limited in the embodiments of the present disclosure.

Embodiments of the present disclosure can be applied to downlink data transmission, uplink data transmission, or device-to-device data transmission. For downlink data transmission, the sending end is a base station, and the corresponding receiving end is a terminal. For uplink data transmission, the sending end is a terminal, and the corresponding receiving end is a base station. For device-to-device data transmission, the sending end is a terminal, and the corresponding receiving end is also a terminal. Both the sending end and the receiving end in the present disclosure may include an encoding device and/or a decoding device, so as to modulate and encode information that needs to be sent, as well as demodulate and decode received encoded information, thereby enabling information transmission between the sending end device and the receiving end device. The embodiments of the present disclosure do not limit this.

It should be noted that FIG. 2 is only an exemplary framework diagram, the number of devices included in FIG. 2 and the names of the respective devices are not limited, and besides the devices shown in FIG. 2, the communication system may also include other devices, such as a core network device.

The application scenarios of the embodiments of the present disclosure are not limited. The system architecture and service scenarios described in the embodiments of the present disclosure are intended to more clearly illustrate the technical solutions of the embodiments of the present disclosure, and do not constitute a limitation on the technical solutions provided in the embodiments of the present disclosure. Those skilled in the art will appreciate that with the evolution of the network architecture and the emergence of new application services scenarios, the technical solutions provided in the embodiments of the present disclosure are equally applicable to similar technical problems.

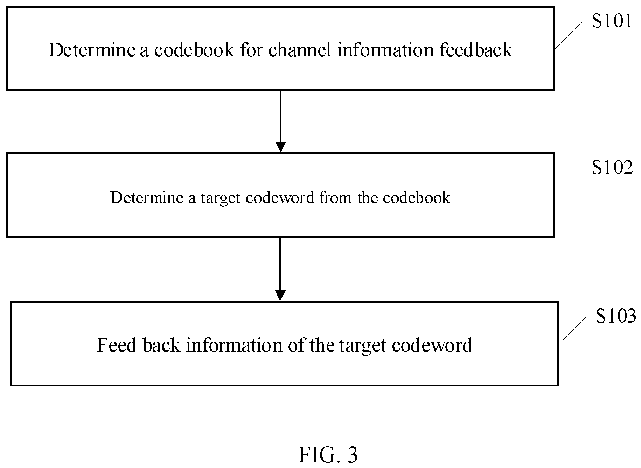

FIG. 3 shows a schematic flowchart of an information feedback method provided by the present disclosure. As shown in FIG. 3, the information feedback method is applied to a first communication node, and includes the following steps.

At S101: a codebook for channel information feedback is determined.

In some embodiments, upon receiving an information feedback instruction from a second communication node, the first communication node starts to determine a codebook for channel information feedback.

Exemplarily, when a base station needs to perform channel estimation, the base station sends an information feedback instruction to a terminal to instruct the terminal to start determining a codebook for channel feedback, so as to feed back information of a target codeword subsequently.

In some embodiments, the codebook for channel information feedback may be determined based on the data transmission capability of the first communication node.

Exemplarily, the terminal sends to the base station information of data transmission capability of the terminal, the information of data transmission capability is used to characterize the data transmission capability that can be supported by the current antenna structure of the terminal. After receiving the information of data transmission capability sent by the terminal, the base station determines a codebook for information feedback according to the information of data transmission capability of the terminal, and then sends codebook indication information to the terminal, and the codebook indication information is used to indicate the codebook used for information feedback. After receiving the codebook indication information sent by the base station, the terminal determines the codebook for channel feedback according to the codebook indication information.

In some embodiments, the codebook includes a plurality of codewords constructed by basic vectors, and each basic vector corresponds to a first vector and a second vector.

The first vector corresponds to a first parameter l, and all elements of the first vector are determined according to the first parameter 1. The second vector corresponds to a second parameter m, and all elements of the second vector are determined according to the second parameter m. The sum of a third parameter A determined by the first parameter l and a fourth parameter B determined based on the second parameter m is not greater than a fifth parameter C, where the fifth parameter C is a real number.

From the above, it can be seen that the first parameter l corresponding to the first vector and the second parameter m corresponding to the second vector have the above constraint, so as to limit the codewords constructed by basic vectors, thereby enabling all codewords in the codebook to be utilized.

At S102: a target codeword is determined from the codebook.

In some embodiments, the first communication node receives a downlink channel state information-reference signal (CSI-RS) sent by the second communication node, determines channel information corresponding to the downlink channel according to the CSI-RS, and then traverses the codewords in the codebook, so as to determine a codeword corresponding to the channel information as the target codeword.

Exemplarily, after the first communication node receives the CSI-RS sent by the second communication node, the determined codeword unit is as follows: $\frac{1}{\sqrt{{N}_{t}}} {e}^{j \left(\frac{2 πl}{{O}_{1} {N}_{1}}+\frac{2 πm}{{O}_{2} {N}_{2}}\right)}$ wherein the codeword unit is also referred to as a code element, and a codeword consists of a plurality of codeword units.

In one possible implementation, the first communication node uses a preset encoding method f to convert the combination (l, m) of the first parameter and the second parameter in the above codeword unit into a new precoding indication k, so that the second communication node determines the codeword corresponding to the precoding indication k based on f⁻¹.

Exemplarily, taking a base station including a UPA as an example, wherein the base station antenna array has Nₓ antennas in the horizontal direction and N_{y} antennas in the vertical direction, and a total of Nₜ = NₓN_{y} codewords are transmitted. A terminal corresponding to the base station is configured with Nᵣ antennas to measure the CSI-RS so as to obtain channel information, then determines, according to the channel information, a target codeword that matches the channel information, and calculates the combination of the first parameter and the second parameter of the target codeword as l₀, m₀. The terminal converts, according to a preset encoding method f, the above combination of the first parameter and the second parameter into codeword information k₀, and sends the codeword information k₀ to the base station, such that the base station determines, based on f⁻¹, the target codeword corresponding to the codeword information k₀.

In other embodiments, the first communication node may directly perform channel estimation on the downlink channel, and then traverse the codewords in the codebook according to the channel estimation result, so as to determine a codeword corresponding to the channel estimation result as the target codeword.

At S103: information of the target codeword is fed back.

In some embodiments, the information of the target codeword is determined according to the first parameter l and the second parameter m of the basic vector corresponding to the target codeword.

Exemplarily, the first communication node measures a correlation or distance metric value between the first parameter and the second parameter of the basic vector corresponding to the target codeword, and then determines, according to the measurement result, the information corresponding to the target codeword.

In some embodiments, the third parameter A satisfies the following relationship: A = a₁l² + b₁, wherein a₁ and b₁ are real numbers, respectively.

In one possible implementation, a₁ is determined based on O₁ and N₁.

Where, l ∈ {0,1,...N₁O₁ - 1}, N₁ is determined by the number n₁ of antenna ports in the first dimension, and O₁ is an integer.

In some embodiments, the third parameter A satisfies one of the following relationships: $A = {\left(\frac{2 l}{{N}_{1} {O}_{1}}\right)}^{2} ;$ $A = {\left(\frac{2 l}{{N}_{1} {O}_{1}}-1\right)}^{2} ;$$A = {\left(\frac{2 \left({l}_{1}{O}_{1}+{q}_{1}\right)}{{N}_{1} {O}_{1}}-1\right)}^{2} ,$
wherein *l* = *l*₁*O*₁ *+ q*₁,*l*₁ ∈ {0,1,...*N*₁ - 1},*q*₁ ∈ {0,1,...*O*₁ - 1}; or $A = {\left(\frac{2 \left({l}_{1}{O}_{1}+{q}_{1}\right)}{{N}_{1} {O}_{1}}\right)}^{2} ,$
wherein *l = l*₁*O*₁ *+ q*₁,*l*₁ E {0,1,...*N*₁ - 1},*q*₁ E {0,1,...*O*₁ - 1}.

In some embodiments, the fourth parameter B satisfies the following relationship: B = a₂m² + b₂, wherein a₂ and b₂ are real numbers, respectively.

In one possible implementation, a₂ is determined based on parameters O₂ and N₂.

Here, m ∈ {0,1,...N₁O₁ - 1}, N₂ is determined by the number n₂ of antenna ports in a second dimension, and O₂ is an integer.

In some embodiments, the fourth parameter B satisfies one of the following relationships: $B = {\left(\frac{2 m}{{N}_{2} {O}_{2}}\right)}^{2} ;$ $B = {\left(\frac{2 m}{{N}_{2} {O}_{2}}-1\right)}^{2} ;$ $B = {\left(\frac{2 \left({m}_{2}{O}_{2}+{q}_{2}\right)}{{N}_{2} {O}_{2}}-1\right)}^{2} ,$
wherein m = m₂O₂ + q₂,m₂ ∈ {0,1,...N₂ - 1},q₂ ∈ {0,1,...O₂ - 1}; or $B = {\left(\frac{2 \left({m}_{2}{O}_{2}+{q}_{2}\right)}{{N}_{2} {O}_{2}}\right)}^{2} ,$
wherein m = m₂O₂ + q₂,m₂ ∈ {0,1,...N₂ - 1},q₂ ∈ {0,1,...O₂ - 1}.

In some embodiments, the fifth parameter C is determined based on values of a₁, b₁, a₂, and b₂.

The value of the fifth parameter C is less than 2, for example, the value of the fifth parameter C is equal to 1.

In some embodiments, the basic vector satisfies one of the following characteristics: $V \left({n}_{2}{N}_{1}+{n}_{1}\right) = exp \left(j2π\left(\frac{l ∗ {n}_{1}}{{N}_{1} {O}_{1}}+\frac{m ∗ {n}_{2}}{{N}_{2} {O}_{2}}\right)\right) ,$ ${n}_{1} ∈ \left\{0,1,…{N}_{1}-1\right\} , {n}_{2} ∈ \left\{0,1,…{N}_{2}-1\right\}$ or $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}\right)\right) ,$ ${n}_{1} ∈ \left\{0,1,…{N}_{1}-1\right\} , {n}_{2} ∈ \left\{0,1,…{N}_{2}-1\right\}$ $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}+{n}_{1}{n}_{2}c\right)\right) ,$ ${n}_{1} ∈ \left\{0,1,…{N}_{1}-1\right\} , {n}_{2} ∈ \left\{0,1,…{N}_{2}-1\right\}$ wherein V *(*n₂N₁ + n₁*)* is an element of a basic vector V indexed by n₂N₁ + n₁, the number of elements of the basic vector V is N₁N₂, and b₁, b₂, and c are real numbers, respectively.

It should be noted that the first vector and the second vector corresponding to the basic vector of the target codeword have a constraint, so as to limit the codewords constructed by the basic vectors, the limited codewords may also be described as reachable codewords. If all codewords included in the codebook are reachable codewords, the codebook may also be described as a reachable codebook. From the related description of FIG. 1 above, the codebook in the related art has defects, that is, there are some codewords in the codebook whose values of the first parameter and the second parameter cannot traverse the sets of the first parameter and the second parameter, which in turn causes that these codewords cannot be realized in the angular space. These codewords are also described as unreachable codewords. The codebook provided by the embodiments of the present disclosure is a reachable codebook, and all codewords in the codebook are reachable codewords.

Exemplarily, taking a base station including a UPA as an example, the differences between the codebook in the related art and the codebook provided by the embodiments of the present disclosure will be described. For ease of description, the codebook in the related art is referred to as the existing codebook, and the codebook provided by the embodiments of the present disclosure is referred to as the present codebook.

Here, the base station with the UPA has Nₓ antennas in the horizontal direction and N_{y} antennas in the vertical direction, and a total of Nₜ = Nₓ N_{y} codewords are transmitted.

Taking the following scenarios as examples, the differences between the existing codebook and the present codebook will be described.

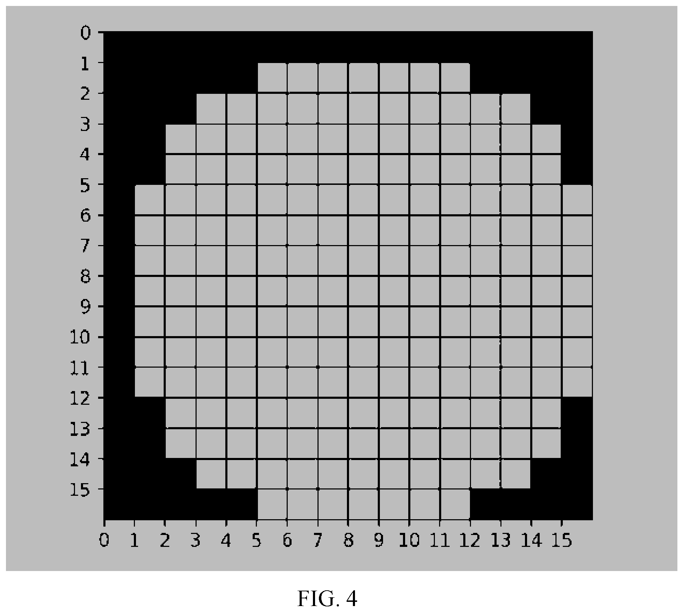

Scenario 1: Taking the number of antennas in both the horizontal and vertical directions of the antenna array being 16 respectively, and the oversampling factors in both the horizontal and vertical directions being 1 respectively as an example, as shown in FIG. 4, the white part represents reachable codewords, and the black part represents unreachable codewords. The present codebook includes only the white part, while the existing codebook includes both the black part and the white part.

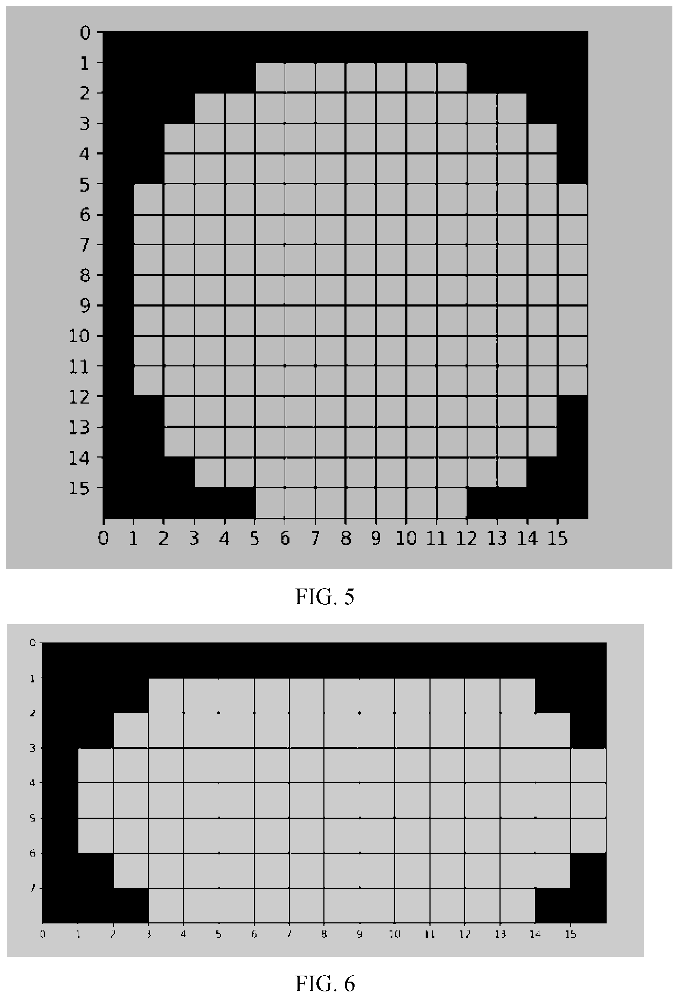

Scenario 2: Taking the number of antennas in both the horizontal and vertical directions of the antenna array being 16 respectively, and the oversampling factors in both the horizontal and vertical directions being 1 respectively as an example, as shown in FIG. 5, the white part represents reachable codewords, and the black part represents unreachable codewords. The present codebook includes only the white part, while the existing codebook includes both the black part and the white part.

Scenario 3: Taking the number of antennas in the horizontal direction of the antenna array being 16, the number of antennas in the vertical direction of the antenna array being 8, and the oversampling factors in both the horizontal and vertical directions being 1 respectively as an example, as shown in FIG. 6, the white part represents reachable codewords, and the black part represents unreachable codewords. The present codebook includes only the white part, while the existing codebook includes both the black part and the white part.

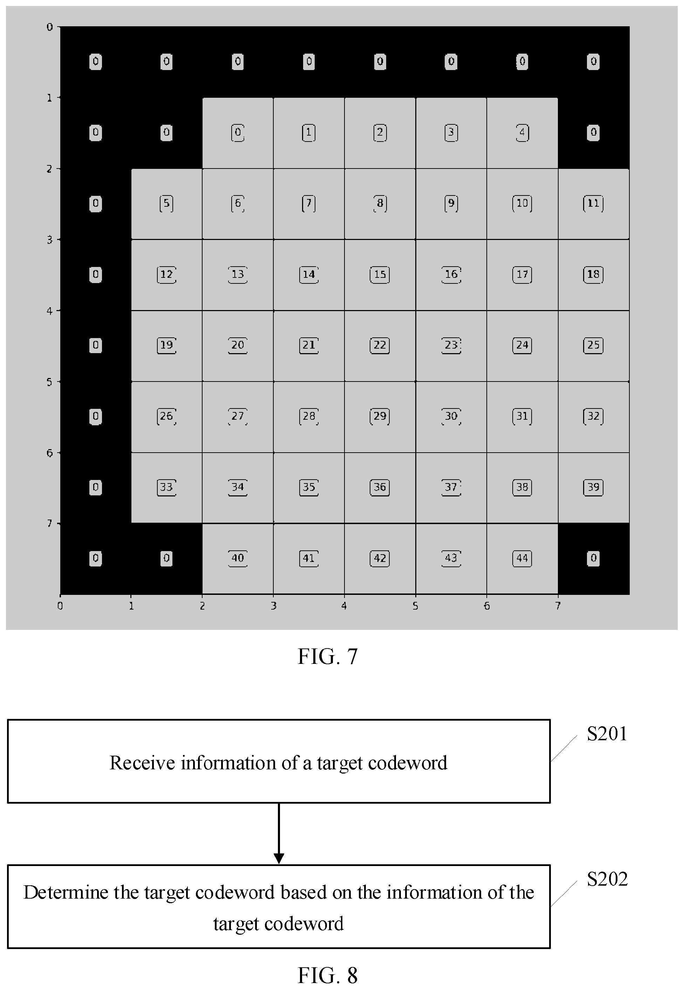

Scenario 4: Taking the number of antennas in the horizontal direction of the antenna array being 8, the number of antennas in the vertical direction of the antenna array being 8, and the oversampling factors in both the horizontal and vertical directions being 1 respectively as an example, as shown in FIG. 7, the white part represents reachable codewords, and the black part represents unreachable codewords. The present codebook includes only the white part, while the existing codebook includes both the black part and the white part. The codeword number in the present disclosure codebook is Cᵣ = {0, 1, 2, ..., 44}, Cᵣ = 44.

In some embodiments, the number of bits in the indication information is determined based on the total number of basic vectors satisfying the constraint.

The constraint includes: a sum of the third parameter A determined by the first parameter l and the fourth parameter B determined based on the second parameter m is not greater than the fifth parameter C, the third parameter A is used to characterize a trigonometric function related to an incident elevation angle and an incident azimuth angle, the fourth parameter B is used to characterize a trigonometric function related to the incident elevation angle, and the fifth parameter C is a real number.

It should be understood that in some cases, the number of bits in the indication information of the target codeword is determined based on all basic vectors in the target codeword, however, in the present disclosure, the number of bits of the indication information of the target codeword is determined based on the total number of basic vectors satisfying the constraint. By reducing the basic vectors in the process of determining the number of bits, the number of bits in the indication information is further reduced, thereby reducing the communication resources occupied by feeding back the indication information corresponding to the target codeword.

Exemplarily, the information of the target codeword may also be described as a precoding matrix indicator (PMI), a precoding indication, etc.

In some embodiments, the number of bits in the information of the target codeword may be determined according to the number of antennas and the number of bits of the codebook corresponding to the target codeword.

Exemplarily, when the number of antennas is 4 and the number of bits of the codebook corresponding to the target codeword is 16, the number of bits of the target codeword is 4. When the number of antennas is 2 and the number of bits of the codebook corresponding to the target codeword is 2, the number of bits of the target codeword is 2.

In the embodiments of the present disclosure, codewords in a codebook are constructed by basic vectors, each basic vector corresponds to a first vector and a second vector. Where, the first parameter corresponding to the first vector and the second parameter corresponding to the second vector have a constraint, so as to limit the codewords constructed by basic vectors, thereby enabling all codewords in the codebook to be utilized. In this way, when information of codewords is fed back, the uncertainty and redundancy of codewords are reduced, and further, the communication resources occupied when feeding back information of codewords are reduced.

FIG. 8 shows a schematic flowchart of an information receiving method provided by the present disclosure. As shown in FIG. 8, the information receiving method is applied to a second communication node, and includes the following steps.

At S201: information of the target codeword is received.

In some embodiments, the information of the target codeword is determined according to the first parameter l and the second parameter m of the basic vector corresponding to the target codeword.

Exemplarily, the first communication node measures a correlation or distance metric value between the first parameter and the second parameter of the basic vector corresponding to the target codeword, and then determines, according to the measurement result, the information corresponding to the target codeword.

The target codeword is a codeword determined from a codebook by the first communication node, and the determination process may refer to the determination process shown in FIG. 3, which will not be repeated here. The codebook includes a plurality of codewords constructed by basic vectors, each basic vector corresponds to one first vector and one second vector, the first vector corresponds to a first parameter l, all elements of the first vector are determined according to the first parameter l, the second vector corresponds to a second parameter m, all elements of the second vector are determined according to the second parameter m, the sum of a third parameter A determined by the first parameter l and a fourth parameter B determined by the second parameter m is not greater than a fifth parameter C, and the fifth parameter C is a real number.

In some embodiments, the third parameter A satisfies the following relationship: A = a₁l² + b₁, wherein a₁ and b₁ are real numbers, respectively.

In one possible implementation, a₁ is determined based on O₁ and N₁.

Where, l ∈ {0,1,...N₁O₁ - 1}, N₁ is determined by the number n₁ of antenna ports in the first dimension,, and O₁ is an integer.

In some embodiments, the third parameter A satisfies one of the following relationships: $A = {\left(\frac{2 l}{{N}_{1} {O}_{1}}\right)}^{2} ;$ $A = {\left(\frac{2 l}{{N}_{1} {O}_{1}}-1\right)}^{2} ;$ $A = {\left(\frac{2 \left({l}_{1}{O}_{1}+{q}_{1}\right)}{{N}_{1} {O}_{1}}-1\right)}^{2} ,$ wherein l = l₁O₁ + q₁,l₁ ∈ {0,1,...N₁ - 1},q₁ E {0,1,...O₁ - 1}; or $A = {\left(\frac{2 \left({l}_{1}{O}_{1}+{q}_{1}\right)}{{N}_{1} {O}_{1}}\right)}^{2} ,$ wherein l = l₁O₁ + q₁,l₁ ∈ {0,1,...N₁ - 1},q₁ ∈ {0,1,...O₁ - 1}.

In some embodiments, the fourth parameter B satisfies the following relationship: B = a₂m² + b₂, wherein a₂ and b₂ are real numbers, respectively.

In one possible implementation, a₂ is determined based on parameters O₂ and N₂.

Wherein, m ∈ {0,1,...N₁O₁ - 1}, N₂ is determined by the number n₂ of antenna ports in the second dimension, and O₂ is an integer.

In some embodiments, the fourth parameter B satisfies one of the following relationships: $B = {\left(\frac{2 m}{{N}_{2} {O}_{2}}\right)}^{2} ;$ $B = {\left(\frac{2 m}{{N}_{2} {O}_{2}}-1\right)}^{2} ;$ $B = {\left(\frac{2 \left({m}_{2}{O}_{2}+{q}_{2}\right)}{{N}_{2} {O}_{2}}-1\right)}^{2} ,$
wherein m = m₂O₂ + q₂,m₂ ∈ {0,1,...N₂ - 1},q₂ ∈ {0,1,...O₂ - 1}; or $B = {\left(\frac{2 \left({m}_{2}{O}_{2}+{q}_{2}\right)}{{N}_{2} {O}_{2}}\right)}^{2} ,$
wherein m = m₂O₂ + q₂,m₂ E {0,1,...N₂ - 1},q₂ E {0,1,...O₂ - 1}.

In some embodiments, the fifth parameter C is determined based on values of a₁, b₁, a₂, and b₂.

The value of the fifth parameter C is less than 2, for example, the value of the fifth parameter C is equal to 1.

In some embodiments, the basic vector satisfies one of the following characteristics: $V \left({n}_{2}{N}_{1}+{n}_{1}\right) = exp \left(j2π\left(\frac{l ∗ {n}_{1}}{{N}_{1} {O}_{1}}+\frac{m ∗ {n}_{2}}{{N}_{2} {O}_{2}}\right)\right) ,$ ${n}_{1} ∈ \left\{0,1,…{N}_{1}-1\right\} , {n}_{2} ∈ \left\{0,1,…{N}_{2}-1\right\}$ or $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}\right)\right) ,$ ${n}_{1} ∈ \left\{0,1,…{N}_{1}-1\right\} , {n}_{2} ∈ \left\{0,1,…{N}_{2}-1\right\}$ $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}+{n}_{1}{n}_{2}c\right)\right) ,$ ${n}_{1} ∈ \left\{0,1,…{N}_{1}-1\right\} , {n}_{2} ∈ \left\{0,1,…{N}_{2}-1\right\}$ wherein V *(*n₂N₁ + n₁*)* is an element of a basic vector V indexed by n₂N₁ + n₁, the number of elements of the basic vector V is N₁N₂, and b₁, b₂, and c are real numbers, resepctively.

In some embodiments, the number of bits in the indication information is determined based on the total number of basic vectors satisfying the constraint.

The constraint includes: the sum of the third parameter A determined by the first parameter 1 and the fourth parameter B determined based on the second parameter m is not greater than the fifth parameter C, the third parameter A is used to characterize a trigonometric function related to an incident elevation angle and an incident azimuth angle, the fourth parameter B is used to characterize a trigonometric function related to the incident elevation angle, and the fifth parameter C is a real number.

It should be understood that in some cases, the number of bits in the indication information of the target codeword is determined based on all basic vectors in the target codeword, however, in the present disclosure, the number of bits in the indication information of the target codeword is determined based on the total number of basic vectors satisfying the constraint. By reducing the basic vectors in the process of determining the number of bits, the number of bits of the indication information is further reduced, thereby reducing the communication resources occupied by feeding back the indication information corresponding to the target codeword.

At S202, the target codeword is determined based on the information of the target codeword.

In some embodiments, after receiving the information of the target codeword sent by the first communication node, the second communication node determines, according to the precoding method f⁻¹ and the information of the target codeword, the target codeword in the codebook.

In some embodiments, the second communication node determines a channel state of a channel according to the target codeword.

It should be understood that different codewords in a codebook correspond to different channel states of a channel, the second communication node may determine a channel state of a channel according to the target codeword corresponding to the received information, so as to formulate corresponding channel strategies, thereby enabling higher transmission performance between the terminal and the base station.

In the embodiments of the present disclosure, codewords in a codebook are constructed by basic vectors, each basic vector corresponds to a first vector and a second vector. Among others, the first parameter corresponding to the first vector and the second parameter corresponding to the second vector have a constraint, so as to limit the codewords constructed by basic vectors, thereby enabling all codewords in the codebook to be utilized. In this way, when receiving information of codewords, the uncertainty and redundancy of codewords are reduced, and further the communication resources occupied when receiving information of codewords are reduced.

It can be understood that, in order to implement the aforementioned functions, the communication apparatus includes respective hardware structures and/or software modules for executing various functions. Those skilled in the art should easily recognize that, in combination with algorithm steps of examples described in the embodiments of the present disclosure, the present disclosure may be implemented in the form of hardware or a combination of hardware and computer software. Whether a certain function is executed by hardware or computer software-driven hardware depends on the specific application and design constraints of the technical solution. Professionals and technicians may use different methods for each specific application to implement the described functions, but such implementation should not be considered beyond the scope of the present disclosure.

The embodiments of the present disclosure may divide functional modules of the communication apparatus according to the aforementioned method embodiments, for example, each functional module may be divided corresponding to each function, or two or more functions may be integrated into one functional module. The aforementioned integrated module may be implemented in the form of hardware or in the form of software. It should be noted that the division of modules in the embodiments of the present disclosure is schematic and is merely a logical function division, and there may be other division manners in actual implementation. In the following, the division of each functional module corresponding to each function will be described as an example.

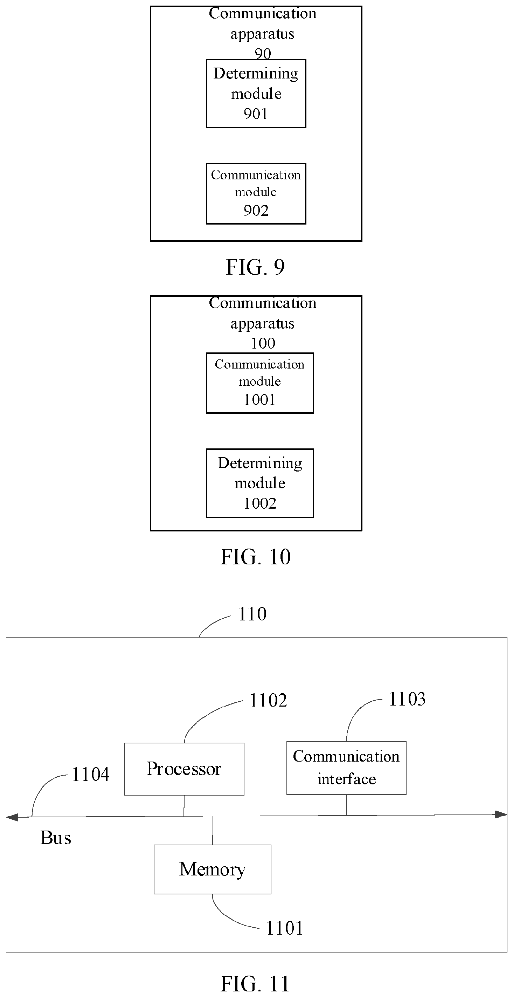

FIG. 9 is a schematic structural diagram of a communication apparatus applied to a first communication node according to an embodiment of the present disclosure, the communication apparatus 90 may execute the information feedback method provided in the aforementioned method embodiments. As shown in FIG. 9, the communication apparatus 90 includes a determining module 901 and a communication module 902.

The determining module 901 is used to determine a codebook for channel information feedback, wherein the codebook includes a plurality of codewords constructed by basic vectors, each basic vector corresponds to one first vector and one second vector, the first vector corresponds to a first parameter l, all elements of the first vector are determined according to the first parameter l, the second vector corresponds to a second parameter m, all elements of the second vector are determined according to the second parameter m, the sum of a third parameter A determined by the first parameter l and a fourth parameter B determined by the second parameter m is not greater than a fifth parameter C, and the fifth parameter C is a real number.

The determining module 901 is further used to determine a target codeword from the codebook.

The communication module is used to feed back information of the target codeword.

In some embodiments, the third parameter A satisfies the following relationship: A = a₁l² + b₁, wherein a₁ and b₁ are real numbers, respectively.

In some embodiments, a₁ is determined based on O₁ and N₁, wherein l ∈ {0,1,...N₁O₁ - 1}, N₁ is determined by the number n₁ of antenna ports in the first dimension, and O₁ is an integer.

In some embodiments, the third parameter A satisfies one of the following relationships: $A = {\left(\frac{2 l}{{N}_{1} {O}_{1}}\right)}^{2} ;$ $A = {\left(\frac{2 l}{{N}_{1} {O}_{1}}-1\right)}^{2} ;$ $A = {\left(\frac{2 \left({l}_{1}{O}_{1}+{q}_{1}\right)}{{N}_{1} {O}_{1}}-1\right)}^{2} ,$
wherein *l = l*₁*O*₁ *+ q*₁,*l*₁ ∈ {0,1,...*N*₁ - 1},*q*₁ ∈ {0,1,...*O*₁ - 1}; or $A = {\left(\frac{2 \left({l}_{1}{O}_{1}+{q}_{1}\right)}{{N}_{1} {O}_{1}}\right)}^{2} ,$
wherein *l* = l₁O₁ + q₁,l₁ ∈ {0,1,...N₁ - 1},q₁ ∈ {0,1,...O₁ - 1}.

In some embodiments, the fourth parameter B satisfies the following relationship: B = a₂m² + b₂, wherein a₂, b₂ are real numbers.

In some embodiments, a₂ is determined based on parameters O₂ and N₂, wherein m ∈ {0,1,...N₁O₁ - 1}, N₂ is determined by the number n₂ of antenna ports in the second dimension, and O₂ is an integer.

In some embodiments, the fourth parameter B satisfies one of the following relationships: $B = {\left(\frac{2 m}{{N}_{2} {O}_{2}}\right)}^{2} ;$ $B = {\left(\frac{2 m}{{N}_{2} {O}_{2}}-1\right)}^{2} ;$ $B = {\left(\frac{2 \left({m}_{2}{O}_{2}+{q}_{2}\right)}{{N}_{2} {O}_{2}}-1\right)}^{2} ,$
wherein *m* = *m*₂*O*₂ + q₂,m₂ ∈ {0,1,...*N*₂ - 1),*q*₂ ∈ {0,1,...*O*₂ - 1}; or $B = {\left(\frac{2 \left({m}_{2}{O}_{2}+{q}_{2}\right)}{{N}_{2} {O}_{2}}\right)}^{2} ,$
wherein m = *m*₂*O*₂ + q₂,m₂ ∈ {0,1,...N₂ - 1},q₂ ∈ {0,1,...O₂ - 1}.

In some embodiments, the fifth parameter C is determined based on values of a₁, b₁, a₂, and b₂.

In some embodiments, the value of the fifth parameter C is less than 2.

In some embodiments, the value of the fifth parameter C is equal to 1.

In some embodiments, the basic vector satisfies one of the following characteristics: $V \left({n}_{2}{N}_{1}+{n}_{1}\right) = exp \left(j2π\left(\frac{l ∗ {n}_{1}}{{N}_{1} {O}_{1}}+\frac{m ∗ {n}_{2}}{{N}_{2} {O}_{2}}\right)\right) ,$ ${n}_{1} ∈ \left\{0,1,…{N}_{1}-1\right\} , {n}_{2} ∈ \left\{0,1,…{N}_{2}-1\right\}$ or $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}\right)\right) ,$ ${n}_{1} ∈ \left\{0,1,…{N}_{1}-1\right\} , {n}_{2} ∈ \left\{0,1,…{N}_{2}-1\right\}$ $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}+{n}_{1}{n}_{2}c\right)\right) ,$ ${n}_{1} ∈ \left\{0,1,…{N}_{1}-1\right\} , {n}_{2} ∈ \left\{0,1,…{N}_{2}-1\right\}$ wherein V *(*n₂N₁ + n₁*)* is an element of a basic vector V indexed by n₂N₁ + n₁, the number of elements of the basic vector V is N₁N₂, and b₁, b₂, and c are real numbers, respectively.

In some embodiments, the number of bits in the information of the target codeword is determined based on the total number of basic vectors satisfying a constraint, and the constraint includes: the sum of the third parameter A determined by the first parameter l and the fourth parameter B determined based on the second parameter m is not greater than the fifth parameter C, the third parameter A is used to characterize a trigonometric function related to an incident elevation angle and an incident azimuth angle, the fourth parameter B is used to characterize a trigonometric function related to the incident elevation angle, and the fifth parameter C is a real number.

FIG. 10 is a schematic structural diagram of a communication apparatus applied to a second communication node according to an embodiment of the present disclosure, the communication apparatus 100 may execute the information receiving method provided in the aforementioned method embodiments. As shown in FIG. 10, the communication apparatus 100 includes a communication module 1001 and a determining module 1002.

The communication module 1001 is used to receive information of a target codeword; wherein the target codeword is a codeword determined from a codebook; the codebook includes a plurality of codewords constructed by basic vectors, each basic vector corresponds to one first vector and one second vector, the first vector corresponds to a first parameter l, all elements of the first vector are determined according to the first parameter l, the second vector corresponds to a second parameter m, all elements of the second vector are determined according to the second parameter m, the sum of a third parameter A determined by the first parameter l and a fourth parameter B determined by the second parameter m is not greater than a fifth parameter C, and the fifth parameter C is a real number.

The determining module 1002 is used to determine the target codeword based on the information of the target codeword.

In some embodiments, the third parameter A satisfies the following relationship: A = a₁l² + b₁, wherein a₁, and b₁ are real numbers, respectively.

In some embodiments, a₁ is determined based on O₁ and N₁, wherein l ∈ {0,1,...N₁O₁ - 1}, N₁ is determined by the number n₁ of antenna ports in the first dimension, and O₁ is an integer.

In some embodiments, the third parameter A satisfies one of the following relationships: $A = {\left(\frac{2 l}{{N}_{1} {O}_{1}}\right)}^{2} ;$ $A = {\left(\frac{2 l}{{N}_{1} {O}_{1}}-1\right)}^{2} ;$ $A = {\left(\frac{2 \left({l}_{1}{O}_{1}+{q}_{1}\right)}{{N}_{1} {O}_{1}}-1\right)}^{2} ,$
wherein *l* = *l*₁*O*₁ *+ q*₁,*l*₁ ∈ {0,1,...*N*₁ - 1},*q*₁ ∈ {0,1,...*O*₁ - 1}; or $A = {\left(\frac{2 \left({l}_{1}{O}_{1}+{q}_{1}\right)}{{N}_{1} {O}_{1}}\right)}^{2} ,$
wherein l = l₁O₁ + q₁,l₁ ∈ {0,1,...N₁ - 1},q₁ ∈ {0,1,...*O*₁ - 1}.

In some embodiments, the fourth parameter B satisfies the following relationship: B = a₂m² + b₂, wherein a₂ and b₂ are real numbers, respectively.

In some embodiments, a₂ is determined based on parameters O₂ and N₂, wherein m ∈ {0,1,...N₁O₁ - 1}, N₂ is determined by the number n₂ of antenna ports in the second dimension, and O₂ is an integer.

In some embodiments, the fourth parameter B satisfies one of the following relationships: $B = {\left(\frac{2 m}{{N}_{2} {O}_{2}}\right)}^{2} ;$ $B = {\left(\frac{2 m}{{N}_{2} {O}_{2}}-1\right)}^{2} ;$ $B = {\left(\frac{2 \left({m}_{2}{O}_{2}+{q}_{2}\right)}{{N}_{2} {O}_{2}}-1\right)}^{2} ,$
wherein *m* = *m*₂*O*₂ + q₂,m₂ E {0,1,...*N*₂ - 1},q₂ ∈ {0,1,...*O*₂ - 1}; or $B = {\left(\frac{2 \left({m}_{2}{O}_{2}+{q}_{2}\right)}{{N}_{2} {O}_{2}}\right)}^{2} ,$
wherein m = m₂O₂ + q₂,m₂ ∈ {0,1,...N₂ - 1},q₂ E {0,1,...O₂ - 1}.

In some embodiments, the fifth parameter C is determined based on values of a₁, b₁, a₂, and b₂.

In some embodiments, the value of the fifth parameter C is less than 2.

In some embodiments, the value of the fifth parameter C is equal to 1.

In some embodiments, the basic vector satisfies one of the following characteristics: $V \left({n}_{2}{N}_{1}+{n}_{1}\right) = exp \left(j2π\left(\frac{l ∗ {n}_{1}}{{N}_{1} {O}_{1}}+\frac{m ∗ {n}_{2}}{{N}_{2} {O}_{2}}\right)\right) ,$ ${n}_{1} ∈ \left\{0,1,…{N}_{1}-1\right\} , {n}_{2} ∈ \left\{0,1,…{N}_{2}-1\right\}$ or $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}\right)\right) ,$ ${n}_{1} ∈ \left\{0,1,…{N}_{1}-1\right\} , {n}_{2} ∈ \left\{0,1,…{N}_{2}-1\right\}$ $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}+{n}_{1}{n}_{2}c\right)\right) ,$ ${n}_{1} ∈ \left\{0,1,…{N}_{1}-1\right\} , {n}_{2} ∈ \left\{0,1,…{N}_{2}-1\right\}$ wherein V *(*n₂N₁ + n₁*)* is an element of a basic vector V indexed by n₂N₁ + n₁, the number of elements of the basic vector V is N₁N₂, and b₁, b₂, and c are real numbers, respectively.

In some embodiments, the number of bits in the information of the target codeword is determined based on the total number of basic vectors satisfying a constraint, and the constraint includes: the sum of the third parameter A determined by the first parameter l and the fourth parameter B determined based on the second parameter m is not greater than the fifth parameter C, the third parameter A is used to characterize a trigonometric function related to an incident elevation angle and an incident azimuth angle, the fourth parameter B is used to characterize a trigonometric function related to the incident elevation angle, and the fifth parameter C is a real number.

In the case where the functions of the aforementioned integrated modules are implemented in the form of hardware, the embodiments of the present disclosure provide another possible structure of the communication apparatus involved in the aforementioned embodiments. As shown in FIG. 11, the communication apparatus 110 includes a processor 1102 and a bus 1104. The communication apparatus may also include a memory 1101; the communication apparatus may also include a communication interface 1103.

The processor 1102 may implement or execute various exemplary logical blocks, modules, and circuits described in connection with the embodiments of the present disclosure. The processor 1102 may be a central processing unit, a general-purpose processor, a digital signal processor, an application-specific integrated circuit, a field programmable gate array or other programmable logic device, a transistor logic device, a hardware component, or any combination thereof. It may implement or execute various exemplary logical blocks, modules, and circuits described in connection with the embodiments of the present disclosure. The processor 1102 may also be a combination that implements computing functions, such as a combination that includes one or more microprocessors, a combination of a DSP and a microprocessor, etc.

The communication interface 1103 is used to connect with other devices via a communication network. The communication network may be Ethernet, a wireless access network, a wireless local area network (WLAN), etc.

The memory 1101 may be a read-only memory (ROM) or other types of static storage devices that may store static information and instructions, a random access memory (RAM) or other types of dynamic storage devices that may store information and instructions, or an electrically erasable programmable read-only memory (EEPROM), a magnetic disk storage medium or other magnetic storage devices, or any other medium that may be used to carry or store desired program code in the form of instructions or data structures and that may be accessed by a computer, but is not limited thereto.

As one possible implementation, the memory 1101 may exist separately from the processor 1102, the memory 1101 may be connected to the processor 1102 via the bus 1104 for storing instructions or program codes. The processor 1102, when calling and executing instructions or program codes stored in the memory 1101, may implement the information feedback and receiving methods provided by the embodiments of the present disclosure.

In another possible implementation, the memory 1101 may also be integrated with the processor 1102.

The bus 1104 may be an Extended Industry Standard Architecture (EISA) bus, etc. The bus 1104 may be divided into an address bus, a data bus, a control bus, etc. For ease of representation, only one thick line is used in FIG. 11, but it does not mean that there is only one bus or one type of bus.

Some embodiments of the present disclosure provide a computer-readable storage medium (e.g., a non-transitory computer-readable storage medium) having computer program instructions stored therein, the computer program instructions, when executed on a computer, cause the computer to perform the information feedback and receiving method according to any one of the aforementioned embodiments.

Exemplarily, the aforementioned computer-readable storage medium may include, but is not limited to, magnetic storage devices (e.g., hard disks, floppy disks, or magnetic tapes, etc.), optical disks (e.g., Compact Disk (CD), Digital Versatile Disk (DVD), etc.), smart cards, and flash memory devices (e.g., Erasable Programmable Read-Only Memory (EPROM), cards, sticks, or key drives, etc.). The various computer-readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

Embodiments of the present disclosure provide a computer program product containing instructions, the instructions, when executed on a computer, cause the computer to perform the information feedback and receiving method according to any one of the aforementioned embodiments.

The foregoing descriptions are merely implementations of the present disclosure, but are not intended to limit the scope of protection of the present disclosure, any changes or substitutions within the technical scope disclosed in the present disclosure should be covered in the scope of protection of the present disclosure. Therefore, the scope of protection of the present disclosure shall be based on the scope of protection of the claims.

## Claims

1. An information feedback method, comprising:
determining a codebook for channel information feedback, wherein the codebook comprises a plurality of codewords constructed by basic vectors, each basic vector corresponds to one first vector and one second vector, the first vector corresponds to a first parameter 1, all elements of the first vector are determined according to the first parameter 1, the second vector corresponds to a second parameter m, all elements of the second vector are determined according to the second parameter m, a sum of a third parameter A determined by the first parameter l and a fourth parameter B determined by the second parameter m is not greater than a fifth parameter C, and the fifth parameter C is a real number;
determining a target codeword from the codebook; and
feeding back information of the target codeword.

2. The method according to claim 1, wherein the third parameter A satisfies the following relationship:
A = a₁l² + b₁, wherein a₁ and b₁ are real numbers, respectively.

3. The method according to claim 2, wherein a₁ is determined based on O₁ and N₁, wherein l ∈ {0,1, ...N₁O₁ - 1}, N₁ is determined by a number n₁ of antenna ports in a first dimension, and O₁ is an integer.

4. The method according to claim 2, wherein the third parameter A satisfies one of the following relationships: $A = {\left(\frac{2 l}{{N}_{1} {O}_{1}}\right)}^{2} ;$ $A = {\left(\frac{2 l}{{N}_{1} {O}_{1}}-1\right)}^{2} ;$ $A = {\left(\frac{2 \left({l}_{1}{O}_{1}+{q}_{1}\right)}{{N}_{1} {O}_{1}}-1\right)}^{2} ,$
wherein *l = l*₁*O*₁ *+ q*₁,*l*₁ ∈ {0,1,...*N*₁ - 1},*q*₁ ∈ {0,1,...*O*₁ - 1}; or $A = {\left(\frac{2 \left({l}_{1}{O}_{1}+{q}_{1}\right)}{{N}_{1} {O}_{1}}\right)}^{2} ,$
wherein *l = l*₁*O*₁ *+ q*₁,*l*₁ ∈ {0,1,...*N*₁ - 1},*q*₁ ∈ {0,1,...*O*₁ - 1}.

5. The method according to claim 1, wherein the fourth parameter B satisfies the following relationship:
B = a₂m² + b₂, wherein a₂ and b₂ are real numbers, respectively.

6. The method according to claim 5, wherein a₂ is determined based on parameters O₂ and N₂, m ∈ {0,1,...N₁O₁ - 1}, N₂ is determined by a number n₂ of antenna ports in a second dimension, and O₂ is an integer.

7. The method according to claim 5, wherein the fourth parameter B satisfies one of the following relationships: $B = {\left(\frac{2 m}{{N}_{2} {O}_{2}}\right)}^{2} ;$ $B = {\left(\frac{2 m}{{N}_{2} {O}_{2}}-1\right)}^{2} ;$ $B = {\left(\frac{2 \left({m}_{2}{O}_{2}+{q}_{2}\right)}{{N}_{2} {O}_{2}}-1\right)}^{2} ,$
wherein *m* = *m*₂*O*₂ + *q*₂,*m*₂ ∈ {0,1,...*N*₂ - 1},*q*₂ ∈ {0,1,...*O*₂ - 1}; or $B = {\left(\frac{2 \left({m}_{2}{O}_{2}+{q}_{2}\right)}{{N}_{2} {O}_{2}}\right)}^{2} ,$
wherein *m* = *m*₂*O*₂ + *q*₂,*m*₂ ∈ {0,1,...*N*₂ - 1},q₂ ∈ {0,1,...*O*₂ - 1}.

8. The method according to claim 5, wherein the fifth parameter C is determined based on values of a₁, b₁,a₂,and b₂.

9. The method according to claim 8, wherein a value of the fifth parameter C is less than 2.

10. The method according to claim 9, wherein a value of the fifth parameter C is equal 1.

11. The method according to claim 1, wherein a basis vector satisfies one of the following relationships: $V \left({n}_{2}{N}_{1}+{n}_{1}\right) = exp \left(j2π\left(\frac{l ∗ {n}_{1}}{{N}_{1} {O}_{1}}+\frac{m ∗ {n}_{2}}{{N}_{2} {O}_{2}}\right)\right) ,$ ${n}_{1} ∈ \left\{0,1,…{N}_{1}-1\right\} , {n}_{2} ∈ \left\{0,1,…{N}_{2}-1\right\}$ or $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}\right)\right) ,$ ${n}_{1} ∈ \left\{0,1,…{N}_{1}-1\right\} , {n}_{2} ∈ \left\{0,1,…{N}_{2}-1\right\}$ $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}+{n}_{1}{n}_{2}c\right)\right) ,$ ${n}_{1} ∈ \left\{0,1,…{N}_{1}-1\right\} , {n}_{2} ∈ \left\{0,1,…{N}_{2}-1\right\}$ wherein V *(*n₂N₁ + n₁*)* is an element of a basic vector V indexed by n₂N₁ + n₁, a number of elements of the basic vector V is N₁N₂, and b₁, b₂ and c are real numbers, respectively.

12. The method according to claim 1, wherein a number of bits in the information of the target codeword is determined based on a total number of basic vectors satisfying a constraint, and the constraint comprises: the sum of the third parameter A determined by the first parameter l and the fourth parameter B determined by the second parameter m is not greater than the fifth parameter C, the third parameter A is used to characterize a trigonometric function related to an incident elevation angle and an incident azimuth angle, the fourth parameter B is used to characterize a trigonometric function related to the incident elevation angle, and the fifth parameter C is a real number.

13. An information receiving method, comprising:
receiving information of a target codeword; wherein the target codeword is a codeword determined from a codebook; the codebook comprises a plurality of codewords constructed by basic vectors, each basic vector corresponds to one first vector and one second vector, the first vector corresponds to a first parameter l, all elements of the first vector are determined according to the first parameter 1, the second vector corresponds to a second parameter m, all elements of the second vector are determined according to the second parameter m, a sum of a third parameter A determined by the first parameter l and a fourth parameter B determined by the second parameter m is not greater than a fifth parameter C, and the fifth parameter C is a real number; and
determining the target codeword based on the information of the target codeword.

14. The method according to claim 13, wherein the third parameter A satisfies the following relationship:
A = a₁l² + b₁, wherein a₁ and b₁ are real numbers, respectively.

15. The method according to claim 14, wherein a₁ is determined based on O₁ and N₁, wherein l ∈ {0,1,...N₁O₁ - 1}, N₁ is determined by a number n₁ of antenna ports in a first dimension, and O₁ is an integer.

16. The method according to claim 14, wherein the third parameter A satisfies one of the following relationships: $A = {\left(\frac{2 l}{{N}_{1} {O}_{1}}\right)}^{2} ;$ $A = {\left(\frac{2 l}{{N}_{1} {O}_{1}}-1\right)}^{2} ;$ $A = {\left(\frac{2 \left({l}_{1}{O}_{1}+{q}_{1}\right)}{{N}_{1} {O}_{1}}-1\right)}^{2} ,$
wherein *l = l*₁*O*₁ *+ q*₁,*l*₁ E {0,1,...*N*₁ - 1},*q*₁ E {0,1,...*O*₁ - 1}; or $A = {\left(\frac{2 \left({l}_{1}{O}_{1}+{q}_{1}\right)}{{N}_{1} {O}_{1}}\right)}^{2} ,$
wherein l = l₁O₁ + q₁,l₁ ∈ {0,1,...N₁ - 1},q₁ ∈ {0,1,...O₁ - 1}.

17. The method according to claim 14, wherein the fourth parameter B satisfies the following relationship:
B = a₂m² + b₂, wherein a₂ and b₂ are real numbers, respectively.

18. The method according to claim 17, wherein a₂ is determined based on parameters O₂ and N₂, m ∈ {0,1,...N₁O₁ - 1},O₂ is an oversampling factor in a vertical dimension, N₂ is determined by a number n₂ of antenna ports in a second dimension, and O₂ is an integer.

19. The method according to claim 17, wherein the fourth parameter B satisfies one of the following relationships: $B = {\left(\frac{2 m}{{N}_{2} {O}_{2}}\right)}^{2} ;$ $B = {\left(\frac{2 m}{{N}_{2} {O}_{2}}-1\right)}^{2} ;$ $B = {\left(\frac{2 \left({m}_{2}{O}_{2}+{q}_{2}\right)}{{N}_{2} {O}_{2}}-1\right)}^{2} ,$
wherein *m* = *m*₂*O*₂ + *q*₂,*m*₂ E {0,1,...*N*₂ - 1},q₂ ∈ {0,1,...*O*₂ - 1}; or $B = {\left(\frac{2 \left({m}_{2}{O}_{2}+{q}_{2}\right)}{{N}_{2} {O}_{2}}\right)}^{2} ,$
wherein *m* = *m*₂*O*₂ + *q*₂,*m*₂ E {0,1,...*N*₂ - 1},*q*₂ ∈ {0,1,...*O*₂ - 1}.

20. The method according to claim 17, wherein the fifth parameter C is determined based on values of a₁, b₁,a₂, and b₂.

21. The method according to claim 20, wherein a value of the fifth parameter C is less than 2.

22. The method according to claim 21, wherein a value of the fifth parameter C is equal 1.

23. The method according to claim 13, wherein a basis vector satisfies one of the following relationships: $V \left({n}_{2}{N}_{1}+{n}_{1}\right) = exp \left(j2π\left(\frac{l ∗ {n}_{1}}{{N}_{1} {O}_{1}}+\frac{m ∗ {n}_{2}}{{N}_{2} {O}_{2}}\right)\right) ,$ ${n}_{1} ∈ \left\{0,1,…{N}_{1}-1\right\} , {n}_{2} ∈ \left\{0,1,…{N}_{2}-1\right\}$ or $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}\right)\right) ,$ ${n}_{1} ∈ \left\{0,1,…{N}_{1}-1\right\} , {n}_{2} ∈ \left\{0,1,…{N}_{2}-1\right\}$ $V \left({n}_{2}{N}_{1}+{n}_{1}\right) = exp \left(j2π\left(\frac{l ∗ {n}_{1}}{{N}_{1} {O}_{1}}-{\left({n}_{1}\right)}^{2}{b}_{1}+\frac{m ∗ {n}_{2}}{{N}_{2} {O}_{2}}-{\left({n}_{2}\right)}^{2}{b}_{2}+{n}_{1}{n}_{2}c\right)\right) ,$ ${n}_{1} ∈ \left\{0,1,…{N}_{1}-1\right\} , {n}_{2} ∈ \left\{0,1,…{N}_{2}-1\right\}$ wherein V *(*n₂N₁ + n₁*)* is an element of a basic vector V indexed by n₂N₁ + n₁, a number of elements of the basic vector V is N₁N₂, and b₁, b₂,and c are real numbers, respectively.

24. The method according to claim 13, wherein a number of bits in the information of the target codeword is determined based on a total number of basic vectors satisfying a constraint, and the constraint comprises: the sum of the third parameter A determined by the first parameter l and the fourth parameter B determined by the second parameter m is not greater than the fifth parameter C, the third parameter A is used to characterize a trigonometric function related to an incident elevation angle and an incident azimuth angle, the fourth parameter B is used to characterize a trigonometric function related to the incident elevation angle, and the fifth parameter C is a real number.

25. A communication apparatus, comprising a processor, wherein the processor, when executing a computer program, implements the information feedback method according to any one of claims 1 to 12, or implements the information receiving method according to any one of claims 13 to 24.

26. A computer-readable storage medium, wherein the computer-readable storage medium comprises computer instructions; wherein the computer instructions, when executed, implements the information feedback method according to any one of claims 1 to 12, or implements the information receiving method according to any one of claims 13 to 24.
